# EUROPÄISCHE PATENTSCHRIFT

(11) **EP 1 882 636 B1**
(45) Veröffentlichungstag und Bekanntmachung des Hinweises auf die Patenterteilung: **06.04.2011**
(21) Anmeldenummer: 07014613.9
(22) Anmeldetag: 25.07.2007
(51) Int. Cl.: B65D 1/24, B65D 6/10, B29C 59/00, B29C 45/00

(54) **Behälter aus Kunststoff sowie Verfahren zum Herstellen eines solchen Behälters**
Container made of plastic and method of manufacturing
Récipient en plastique et procédé de fabrication

(30) Priorität: 26.07.2006 DE 102006034603
(43) Veröffentlichungstag der Anmeldung: 30.01.2008
(73) Patentinhaber: Schoeller Arca Systems GmbH, 19057 Schwerin (DE)
(72) Erfinder:
(74) Vertreter: Bockhorni & Kollegen

(56) Entgegenhaltungen:
- EP-A- 0 607 469
- WO-A-96/33917
- CH-A5- 694 315
- DE-U1- 29 706 945
- FR-A- 1 480 404
- FR-A- 2 873 995
- US-A1- 2006 013 975

## Beschreibung

Die Erfindung betrifft einen Behälters aus Kunststoff gemäß den Merkmalen des Anspruchs 1, sowie ein Verfahren zum Herstellen eines solchen Behälters gemäß den Merkmalen des nebengeordneten Anspruchs.

Behälter aus Kunststoff, vorzugsweise zur Lagerung und zum Transport von Stückgütern, insbesondere Flaschen, sind aus dem Stand der Technik hinreichend bekannt. Ebenso sind aus dem Stand der Technik diverse Verfahren zum Herstellen solcher Behälter aus Kunststoff bekannt.

Weit verbreitet ist das Herstellen solcher Behälter durch Spritzgießen, wobei die Behälter einstückig ausgebildet werden. Das Spritzgießen kann berechtigt als ein Standardverfahren zum Herstellen der betreffenden Behälter angesehen werden. Um Ausnehmungen, Hinterschnitte und Hohlkonturen ausbilden zu können sind in den Spritzgießformen vorzugsweise gekühlte Kerne vorgesehen, die zu Beginn des Spritzgießprozesses in den Bereich der auszubildenden Ausnehmungen eindringen und vor der Entformung des Behälters wieder zurückgezogen werden müssen. Solche Verfahren sind bspw. in der EP 1 008 527 B1 und in der DE 10 2004 038 615 A1 beschrieben.

Die Spritzgießverfahren wurden in jüngerer Zeit erheblich weiterentwickelt und auch mit anderen Verfahren kombiniert, mit dem Ziel die betreffenden Behälter stabiler, günstiger und auch optisch ansprechender zu gestalten. Hier ist z. B. das in der DE 38 39 087 C2 beschriebene Verfahren zum Herstellen eines Flaschenkastens zu nennen, bei dem durch gezieltes Einblasen von Gas in die in der Form befindliche Materialschmelze (Kunststoffschmelze) definierte Hohlräume ausgebildet werden.

Darüber hinaus wurden in jüngerer Zeit so genannte Overmoulding-Verfahren weiterentwickelt, bei denen der betreffende Behälter aus wenigstens zwei verschiedenen Kunststoffmaterialien quasi in einem Arbeitsgang hergestellt wird. Hierbei wird zunächst das eine Kunststoffmaterial gespritzt und dann in einem zweiten Arbeitsgang das zweite Kunststoffmaterial so zusagen aufgespritzt oder angespritzt. Mit einem solchen Overmoulding-Verfahren können Kunststoffmaterialien mit sehr unterschiedlichsten Eigenschaften (Festigkeit, Transparenz, Farbe, Griffigkeit etc.) zusammengebracht werden. Eine grundlegende Idee hierbei ist, dass die unterschiedlichen Kunststoffmaterialien scharf voneinander getrennt sind, was meist aus ästhetischen Gründen gefordert ist.

Darüber hinaus ist in jüngerer Zeit auch eine Sandwichbauweise (Mehrlagenaufbau) bekannt geworden, wie bspw. in der EP 1661815 beschrieben. Solche Behälter sind auch aus der DE 10 2004 057 786 A1 und der DE 299 06 951 U1 bekannt.

Die oben beschriebenen Spritzgießverfahren weisen den Nachteil auf, dass insbesondere bei einer einstückigen Herstellung, d. h. beim Herstellen des Behälters in einem Arbeitsgang, teilweise eine aufwändige Werkzeugkonstruktion und/oder Prozessführung erforderlich ist, insbesondere dann, wenn Kerne zur Ausbildung von Hohlräumen und dgl. erforderlich sind. Dies trifft in verstärktem Maße auf das Herstellen von Behältern zu, die aus mehreren Kunststoffmaterialien gebildet sind, denn gerade hier erweisen sich der Werkzeugaufbau und die Prozessführung als äußerst aufwändig. Die komplizierten Herstellungsanlagen treiben dann natürlich den Stückpreis (Fertigungskosten) der hergestellten Behälter nach oben. Die spritzgießtechnischen Vorgaben engen zudem die Freiheitsgrade für die ästhetische Gestaltung der Behälter stark ein.
Die Absatzchancen solcher Behälter werden jedoch gerade in erheblichem Maße durch den Stückpreis und die ästhetische Gestaltung bestimmt.

Weiterhin sind aus der EP 0 607 469 A zweiteilig Plastikgehäuse mit doppelten Wänden bekannt, die ineinander gesteckt werden. Das Dokument EP060749A1 offenbart einen Behälter gemäß dem Oberbegriff des Anspruchs 1.

Aufgabe der Erfindung ist die Bereitstellung eines einfach herstellbaren und stabilen Behälters mit niedrigen Fertigungsstückkosten, wobei dieser Behälter bevorzugt aus wenigstens zwei Kunststoffmaterialien herstellbar sein soll, sowie eines Verfahrens zum Herstellen eines solchen Behälters das viele Freiheitsgrade für die ästhetischen Gestaltung bietet.

Die Aufgabe wird u. a. gelöst durch einen Behälter gemäß den Merkmalen des Anspruchs 1, sowie durch ein Verfahren zum Herstellen gemäß den Merkmalen des nebengeordneten Anspruchs. Die Merkmale der Unteransprüche beziehen sich jeweils auf vorteilhafte und bevorzugte Weiterbildungen.

Gemäß dem Anspruch 1 ist vorgesehen, dass der Behälter aus wenigstens einer inneren Komponente (bzw. Innenkomponente) und aus wenigstens einer äußeren Komponente (Außenkomponente) gebildet ist, die mittels Verschweißung und/oder Verklebung fest zusammen gefügt sind. Weiter ist erfindungsgemäß vorgesehen, dass der Behälter (1) eine einstückig ausgebildete Innenkomponente (10) und eine zweiteilig ausgebildete Außenkomponente (11) umfasst, wobei jede Teilkomponente (111, 112) der Außenkomponente (11) jeweils eine Stirnseite (31) und eine Längsseite (32) umfasst, oder dass der Behälter (1) eine einstückig ausgebildete Innenkomponente (10) und eine mit vier im Wesentlichen plattenartigen Teilkomponenten ausgebildete Außenkomponente umfasst, wobei jede Teilkomponente der Außenkomponente einer Stirnseite oder einer Längsseite (32) entspricht.

Fernerhin sind die wenigstens eine innere Komponente und die wenigstens eine äußere Komponente unter Ausbildung einer wenigstens einen Hohlraum aufweisenden doppelwandigen Seitenwandung zusammengefügt. Eine solche doppelwandige Seitenwandung die wenigstens einen Hohlraum einschließt führt im Sinne der Aufgabenstellung zu einem äußerst stabilen Behälter. Die hohe Stabilität und die hohe Verwindungssteifigkeit eines solchen Behälter liegt weit über dem, was mit den eingangs genannten Behälter in Sandwichbauweise erreichbar ist. Fernerhin eignet sich der erfindungsgemäße Behälter insbesondere zur Stapelung, da in Folge der doppelwandigen Seitenwandung, die wenigstens einen Hohlraum einschließt, ein besonderes guter Lastabtrag gegeben ist (hohe Knickstabilität der Seitenwandung). Andererseits weißt der erfindungsgemäße Behälter trotz seiner hohen Stabilität ein geringes Gewicht auf, das deutlich unterhalb der eingangs genannten Behälter in Sandwichbauweise liegt. Der erfindungsgemäße Behälter bietet daher ein hervorragendes Verhältnis aus Eigengewicht zu Ladegewicht (Beladungsgewicht).

Unter Behälter wird im Sinne dieser Anmeldung eine vorzugsweise quaderförmige Lager- und Transportvorrichtung verstanden, die zumindest einen Boden (Behälterboden) und vier im Wesentlichen senkrecht zu diesem Boden und um diesen herum angeordnete Seitenwände, die eine Seitenwandung bilden, umfasst. Ein solcher Behälter weist erfindungsgemäß eine im Wesentlichen starre Gesamtkonstruktion auf.

Bevorzugt ist vorgesehen, dass der Behälter ein Flaschenkasten zur Lagerung und zum Transport von Flaschen und dgl. ist.

Eine wesentliche Idee der Erfindung ist, dass die Außenkomponente unabhängig von der Innenkomponente herstellbar ist und damit eine funktionale Trennung zwischen der Außenkomponente und der Innenkomponente möglich wird. Bei der Gestaltung der Innenkomponente können dann vorrangig Kriterien wie Festigkeit, Steifigkeit, Lastabtragevermögen, Bruchsicherheit u. dgl. berücksichtigt werden, während bei der Gestaltung der Außenkomponente vorrangig ästhetische Gesichtspunkte berücksichtig werden können. (Der Begriff Gestaltung bezieht sich hier sowohl die funktionale Konstruktion als auch auf die ästhetische Ausbildung.). Dies trifft auch auf die Materialauswahl zu: während bei der Materialauswahl für die Innenkomponente Kriterien wie beispielsweise Schlagzähigkeit, Bruchsicherheit und Festigkeit im Vordergrund stehen, können für die Außenkomponente Materialen gewählt werden, die dem Behälter vorrangig ein hochwertiges Aussehen verleihen.

Den Gestaltungsmöglichkeiten für einen solchen Behälter waren bisher durch die fertigungstechnischen Bedingungen, insbesondere durch die im Herstellungsprozess erforderlichen Kerne, enge Grenzen gesetzt. Die Gestaltung musste sich dem technisch und preislich Machbaren unterordnen. Indem der erfindungsgemäße Behälter wenigstens eine Innenkomponente und wenigstens eine Außenkomponente aufweist, werden neue Freiheitsgrade, bzw. Freiräume für die Konstruktion und die ästhetische Ausbildung (Design) geschaffen. Bei der Gestaltung bzw. Konstruktion der Innenkomponente kann man sich nun schwerpunktmäßig auf Funktionales beschränken während man sich bei der Gestaltung bzw. Ausbildung der Außenkomponente schwerpunktmäßig auf das Design beschränken kann. Des Weiteren sind Kerne im Herstellungsprozess nun prinzipiell nicht mehr erforderlich, wodurch zusätzliche Freiräume geschaffen werden.

Bei optimaler Umsetzung des Erfindungsgedanken ist es möglich, im Vergleich zu den bisher bekannten Lösungen, bei verbesserter Steifigkeit und Stabilität das Gewicht eines Behälters weiter zu reduzieren. Ebenfalls ist es durch Verwendung entsprechender Kunststoffmaterialen möglich, und auch wegen der oben bereits beschriebenen einfacheren Werkzeuggestaltung für den Spritzgießprozess, die Fertigungsstückkosten zu senken. Dies ist u.a. auch darauf zurück zu führen, dass nunmehr konsequent konstante Wandstärken (d.h. keine abrupten Wanddickenänderungen) realisierbar sind, oder andererseits Wanddickenänderung gezielt (d.h. nicht fertigungstechnisch bedingt) eingebracht werden können.

An dieser Stelle soll darauf hingewiesen werden, dass es nicht erforderlich ist, dass der erfindungsgemäß Behälter aus zwei unterschiedlichen Kunststoffmaterialien gebildet ist. Vielmehr besteht auch die Möglichkeit, die einzelnen Behälterkomponenten aus ein und demselben Kunststoffmaterial herzustellen.

In einer bevorzugten Weiterbildung des Behälters ist vorgesehen , dass eine Innenwandung der doppelwandigen Seitenwandung durch die wenigstens eine innere Komponente gebildet ist und eine Außenwandung der doppelwandigen Seitenwandung durch die wenigstens eine äußere Komponente.

Mit Innenwandung ist ein zum Behälterinneren weißende Wandungsabschnitt (bzw. Bereich) der Seitenwandung (Behälterwandung) gemeint. Mit Außenwandung ist ein nach außen weisende Wandungsabschnitt (bzw. Bereich) der Seitenwandung gemeint.

Durch die Verbindung der wenigstens einen inneren Komponente mit der wenigstens einen äußeren Komponente im Seitenwandbereich ergibt sich in synergetischer Wirkung ein sehr steifer und tragfähiger Behälter.

In einer weiterhin vorteilhaften Weiterbildung ist vorgesehen, dass die wenigstens eine innere Komponente und die wenigstens eine äußere Komponente jeweils für sich betrachtet formstabil ausgebildet sind, wobei sich diese Formstabilität auf den ausgekühlten Zustand nach dem Urformprozess (Spritzgießprozess) bezieht.

In einer ebenso vorteilhaften Weiterbildung ist vorgesehen, dass die wenigstens eine innere Komponente und die wenigstens eine äußere Komponente des Behälters vermittels mehrerer Rippen miteinander verschweißt sind, wobei die Stirnflächen dieser Rippen die Verbindungsflächen sind, und/oder vermittels mehrerer Klebeflächen. Bevorzugt ist jedoch die Beschränkung auf nur eine Verbindungsart d.h. nur Verkleben oder nur Verschweißen.

Indem sich die komponentenverbindende Rippenstrukturen innerhalb der Seitenwandung befinden, kann die Seitenwandung im Übrigen auf einfache Weise innen und außen glatt sowie eben (glattflächig) gestaltet werden. Solche ebenen und glatten Wandabschnitte sind bspw. zu Werbezwecken beklebbar und/oder bedruckbar und lassen sich auch sehr leicht reinigen.

Die Aufgabe wird auch gelöst durch einen Behälter aus Kunststoff, wobei es sich insbesondere um einen Flaschenkasten handelt, zur Lagerung und zum Transport von Gegenständen, insbesondere Flaschen, der einen Boden und eine im Wesentlichen senkrecht um diesen Boden herum ausgebildete Seitenwandung umfasst bzw. aufweist. Dieser Behälter ist aus wenigstens einer inneren Komponente und aus wenigsten einer äußeren Komponente gebildet, die mittels Verschweißung und/oder Verklebung fest zusammen gefügt sind. Für einen solchen Behälter wird selbständig Schutz beansprucht. Bevorzugt kann ein solcher Behälter gemäß dem vorausgehenden Ausführungen oder wie im Zusammenhang mit den Ausführungsbeispielen gezeigt und beschrieben, weitergebildet sein.
Weitere Vorteile sind nachfolgend im Zusammenhang mit einem erfindungsgemäßen Herstellungsverfahren beschrieben.

Das Verfahren zum Herstellen eines Behälters aus Kunststoff gemäß dem nebengeordneten Anspruch umfasst die folgenden Schritte:
- Urformen mittels Spritzgießen, wenigstens einer inneren Komponente aus einem ersten Material, vorzugsweise einem Kunststoffmaterial,
- Urformen mittels Spritzgießen, wenigstens einer äußeren Komponente aus einem zweiten Material, vorzugsweise einem Kunststoffmaterial, und
- Verschweißen und/oder Verkleben der wenigstens einen inneren Komponente und der wenigstens einen äußeren Komponente, wobei die wenigstens eine innere Komponente und die wenigstens eine äußere Komponente unter Ausbildung einer wenigstens einen Hohlraum aufweisenden doppelwandigen Seitenwandung zusammengefügte werden.

Das erfindungsgemäße Verfahren weist zunächst den Vorteil auf, dass trotz Verwendung mehrerer Kunststoffmaterialien prinzipiell auf die bisher übliche Verwendung von Kernen (zur Ausbildung von Hohlräumen) verzichtet werden kann, oder dass zumindest deren Anzahl deutlich reduziert werden kann. Hierdurch vereinfachen sich der Werkzeugaufbau und die Prozessregelung, da natürlich auch die Antriebsmechanik und Steuereinrichtung für die Bewegung der Kerne entfällt. In der Folge können die Fertigungskosten deutlich reduziert werden, was ein entscheidendes Kriterium für die Marktdurchsetzung ist.

Durch das erfindungsgemäße Verfahren lässt sich ein Behälter herstellen, der hinsichtlich seiner äußeren Aufmachung ganz individuell nach Kundenwünschen gestaltet werden kann, da die Außenkomponente ja völlig separat und damit ästhetisch als auch materialmäßig unabhängig von der Innenkomponente hergestellt wird. Dies bedeutet ein hohes Maß an ästhetischer Freiheit die zur Außengestaltung des Behälters zur Verfügung steht.

Andererseits benötigt man im Prinzip zur Herstellung der Innenkomponente nur eine Form und kann dann unter Verwendung dieser einen Form Kästen herstellen, die wegen ihrer abweichenden Außenkomponenten unterschiedlichsten Kundenwünschen gerecht werden können. Wie bereits zuvor dargelegt, ist die Gestaltung der Außenkomponente vollkommen unabhängig von der der Innenkomponente, so dass mit ein und derselben Innenkomponente unterschiedlichste Behälter variabel gestaltet werden können, was vorteilhaft geringe Fertigungsstückkosten zur Folge hat.

Insbesondere für die Herstellung der Außenkomponente kann man sich im Prinzip abseits dem Spritzgießen auch anderer Herstellungsverfahren bedienen, wie beispielsweise Formlaminieren, Tiefziehen oder Stanzen, wodurch sich verschiedenste Designelemente realisieren lassen, die sich durch Spritzgießen nicht oder nur umständlich erreichen lassen. Die zuvor angesprochenen Designelemente können beispielsweise aber auch durch Heißprägen hergestellt werden, womit sich auch metallische Effekte realisieren lassen, die dem Behälter ein besonders hochwertiges Aussehen verleihen.

Weitere Vorteile des zuvor beschriebenen Herstellungsverfahrens sind insbesondere auch oben im Zusammenhang mit dem erfindungsgemäßen Behälter dargelegt.
Weitere Vorteile der Erfindung ergeben sich auch aus den nachfolgenden Ausführungsbeispielen. Die im Zusammenhang mit den einzelnen Figuren beschriebenen Merkmale sind im Rahmen dieser Erfindung, sofern technisch umsetzbar, als universelle Merkmale anzusehen und daher nicht auf ein einzelnes Ausführungsbeispiel beschränkt. Gleiche Komponenten sind (sofern möglich) mit gleichen Bezugszeichen bezeichnet. Es zeigen:
- Fig. 1a-1c: einen Flaschenkasten in einer perspektivischen Ansicht als erstes Ausführungsbeispiel des erfindungsgemäßen Behälters, sowie Zwischenstadien bei dessen Herstellung;
- Fig. 1d: eine Detailansicht eines Eckverbindungsbereiches des Flaschenkastens gemäß Fig. 1a in einer Schnittansicht;
- Fig. 2: einen weiteren Flaschenkasten in einer perspektivischen Ansicht als ein zweites Ausführungsbeispiel des erfindungsgemäßen Behälters;
- Fig. 3a-3c: einen weiteren Flaschenkasten in einer perspektivischen Ansicht als ein drittes Ausführungsbeispiel des erfindungsgemäßen Behälters, sowie Zwischenstadien bei dessen Herstellung;
- Fig. 4a-4c: einen weiteren Flaschenkasten in einer perspektivischen Ansicht als weiteres Ausführungsbeispiel;
- Fig. 5: den Flaschenkasten gemäß der Fig. 4a in einer perspektivischen Ansicht als alternatives Ausführungsbeispiel, das nicht Teil der Erfindung ist; und
- Fig. 6a-6b: eine Seitenwandung eines Flaschenkastens im Querschnitt mit verzahnungsartig angeordneten Stützrippen.

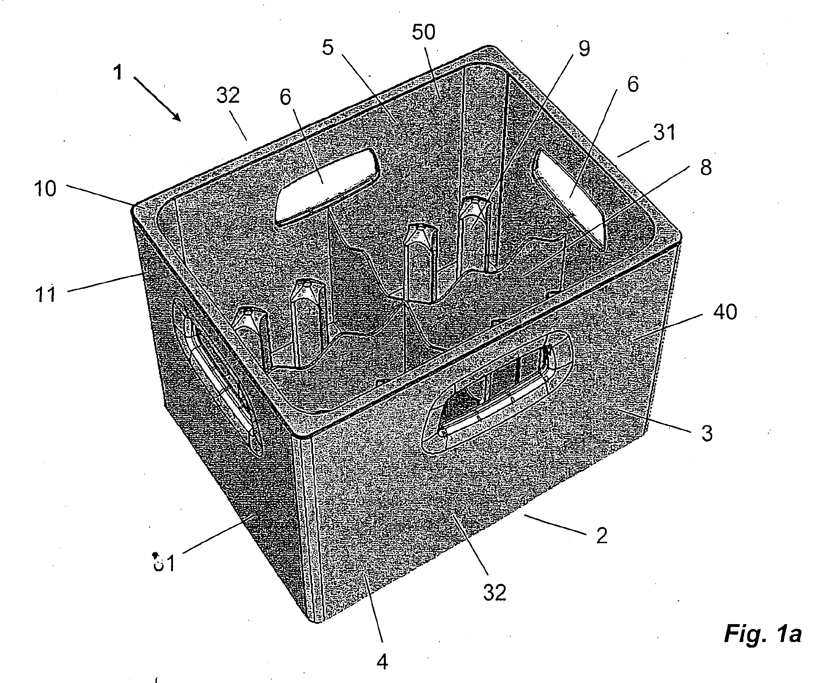

Die Fig. 1a zeigt einen mit 1 bezeichneten Flaschenkasten als erstes Ausführungsbeispiel. Der Flaschenkasten 1 weist einen im Wesentlichen rechteckförmigen Boden 2 auf und eine dazu rechtwinklig ausgebildete Seitenwandung 3, die vier Seitenwände umfasst, nämlich zwei gegenüberstehende Stirnwände (Schmalseiten) 31 und zwei sich ebenfalls gegenüberstehende Längswände (Langseiten) 32. Die Seitenwandung 3 des Flaschenkastens 1 weist ferner eine nach außen weisende Außenfläche 4 und eine zum Kasteninneren hin gerichtete Innenfläche 5 auf, die jeweils mehrere aneinandergrenzende, ebene, geschlossene und im Wesentlichen rechteckige Flächenabschnitte umfasst. Diese so ausgebildeten Flächenabschnitte verleihen dem Flaschenkasten eine qualitativ hochwertige optische und haptische Erscheinung. Gleichzeitig sind solche Flächenabschnitte leicht zu reinigen und für Werbezwecke sehr gut beschriftbar, bedruckbar und/oder beklebbar.

In den Eckbereichen der Seitenwandung 3 ist der Flaschenkasten 1 sowohl an seiner Außenfläche 4 als auch an seiner Innenfläche 5 gerundet ausgebildet, was die Verletzungsgefahr verringert und den Kraftfluss in der Seitenwandung 3 bei Belastung des Flaschenkastens optimiert. Jede Seitenwand der Seitenwandung 3 weist einen als Durchgriffsöffnung 6 ausgebildeten Tragegriff auf. Von der Außenfläche 4 her sind die Durchgriffsöffnungen 6 verrundet ausgebildet, was den Tragekomfort des Flaschenkastens 1 erhöht. Die Seitenwandung 3 ist um den Boden 2 herum umlaufend doppelwandig ausgebildet, womit gemeint ist, dass zwischen der Außenfläche 4 und der Innenfläche 5 Hohlräume in die Wandstruktur integriert sind. Ein solch doppelwandiger Aufbau erweist sich als äußerst stabil bei gleichzeitig geringem Gewicht.

Der Innenbereich des Flaschenkastens 1 ist durch im Wesentlichen symmetrisch ausgebildete Trennwände 8 in vier gleich große Quadranten unterteilt. Die nach oben wellenartig ausgebildeten Trennwände 8 erstrecken sich im Wesentlichen senkrecht vom Boden 2, sind jedoch nicht über die gesamte Kastenhöhe ausgebildet. Gleichzeitig sind die Trennwände mit der Innenfläche 5 verbunden. Fernerhin sind im Innenbereich in an sich bekannter Weise acht Pinolen 9 angeordnet, die einen quadratischen Querschnitt mit gefasten Ecken und leicht konkav gewölbten und bevorzugt an die Flaschenform angepasste Seitenflächen aufweisen. Die Pinolen 9 sind am Boden 2 angeordnet, bevorzugt einteilig angeformt, und erstrecken sich im Wesentlichen senkrecht von diesem. Die Pinolen 9 sind jedoch, wie die Seitenwände 8 auch, nicht über die gesamte Kastenhöhe ausgebildet. Die Trennwände 8 und die Pinolen 9 definieren Stellplätze für Sixpacks oder auch für einzelne Flaschen. Die Trennwände 8 dienen gleichzeitig auch der Stabilisierung des Kastens, in dem sie quasi fachwerkartig die Seitenwände der Seitenwandung 3 untereinander und mit dem Boden 2 fest verbinden und damit die Steifigkeit und Tragfähigkeit des Flaschenkastens 1 erhöhen.

Der Flaschenkasten 1 der Fig. 1a ist aus einer inneren Komponente bzw. Innenkomponente 10 und einer äußeren Komponente bzw. Außenkomponente 11 gebildet, worauf nachfolgend näher eingegangen wird.

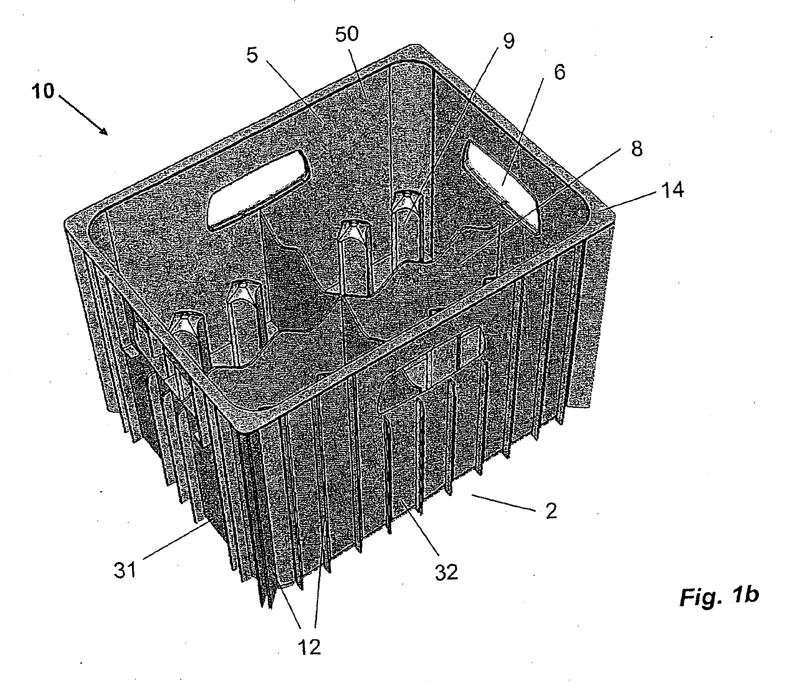

Die hier einstückig und einteilig ausgebildete Innenkomponente 10 ist in Fig. 1b gezeigt, ebenfalls in einer perspektivischen Ansicht. Diese umfasst den Boden 2, einschließlich der sich von diesem erstreckenden Pinolen 9, sowie eine senkrecht um den Boden 2 herum ausgebildete Innenwandung 50, welche die Innenfläche 5 des Flaschenkastens umfasst und die inneren Wandungsabschnitte der Seitenwandung 3 des Flaschenkastens 1 bestimmt (hierauf wird nachfolgend noch näher eingegangen). Die Innenwandung ist (wie bereits oben beschrieben) in den Eckbereichen, d.h. dort wo die Stirnwände 31 und die Längswände 32 aneinander stoßen, mit tangentenstetigen Übergangsradien ausgebildet. Fernerhin umfasst die Innenkomponente 10 die Trennwände 8, die mit dem Boden 2 und der Innenwandung 50 verbunden, bevorzugt eintstückig hergestellt sind. Die zum Kasteninneren hin weisenden Flächenabschnitte der Innenwandung 50 sind (wie bereits oben beschrieben) mit einer geschlossenen und ebenen Oberfläche ausgebildet. Auf der Außenseite, d.h. den dem Kasteninneren abgewandten Flächenabschnitten der Innenwandung 50 weist diese ringsherum im Wesentlichen senkrecht abstehende Rippen 12 auf. Diese Rippen 12 erstrecken sich im Wesentlichen senkrecht zum Boden 2 und sind mit unterschiedlichen Längen ausgebildet, wobei sich einzelne Rippen über die gesamte Kastenhöhe erstrecken. Im Bereich der Durchgriffsöffnungen 6 sind diese Rippen 12 vom Boden 2 bis an diese heran ausgebildet. Im Bereich der Ecken sind jeweils zwei eng benachbarte und parallel ausgebildete Rippen 12 angeordnet.

Im oberen Abschnitt der Innenkomponente 10 ist diese mit einem vom Kasteninneren wegweisenden und umlaufenden Kragen 14 ausgebildet, der in seiner Ausdehnung die Rippen 12 überdeckt bzw. überdacht und die doppelwandige Seitenwandung 3 des Kastens 1 nach oben hin verschließt, wie aus Fig. 1a ersichtlich.

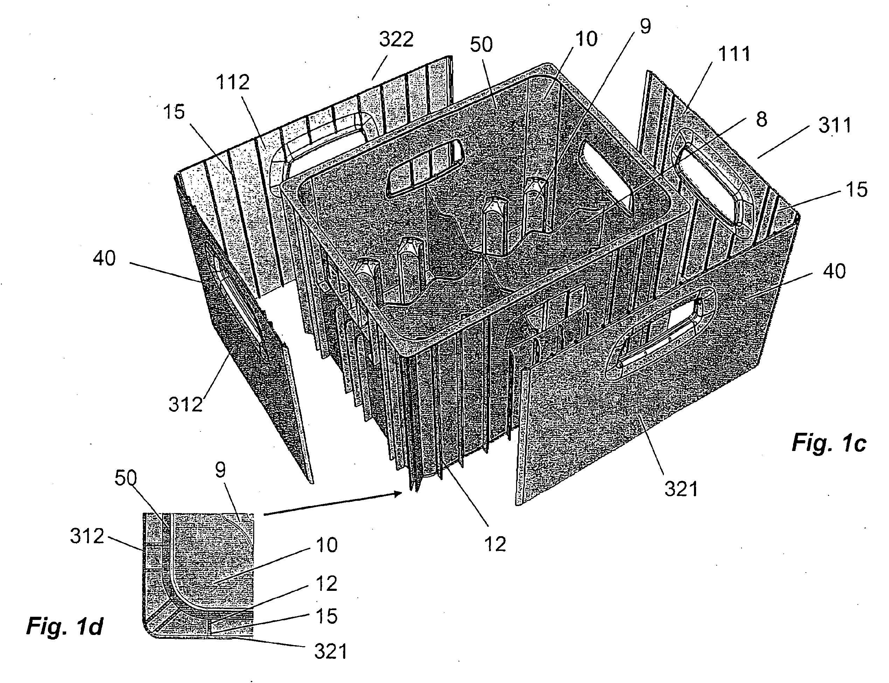

Fig. 1c zeigt den Flaschenkasten 1 in einer perspektivischen Explosionsansicht, wobei sehr gut dessen Aufbau aus Innenkomponente 10 und Außenkomponente ersichtlich ist. Die Außenkomponente umfasst gemäß Darstellung zwei Teilkomponenten 111 und 112 welche die Außenwandung 40 der Seitenwandung 3 bilden und die jeweils eine plattenartige Stirnwand 311 (bzw. 312) und eine plattenartige Längswand 321 (bzw. 322) umfassen. Die Teilkomponenten 111 und 112 sind einstückig hergestellt. Wie bereits oben beschrieben ist die nach außen weisende Oberfläche dieser Teilkomponenten 111 und 112, die die Außenfläche 4 des Flaschenkastens 1 bildet, im Wesentlichen geschlossen und eben ausgebildet. Der Übergangsbereich von der Stirnwand 311 zur Längswand 321 (bzw. Stirnwand 312 zur Längswand 322) ist verrundet ausgebildet, bevorzugt tangentenstetig verrundet. Die Teilkomponenten 111 und 112 weisen an den Seitenwandabschnitten 311, 321, 312 und 322 Öffnungen auf, die zu jeweiligen Öffnungen der Innenkomponente 10 korrespondieren, und die Durchgriffsöffnungen 6 ausbilden. Auf der Innenseite, d. h. der von der Außenfläche abgewandten Oberfläche dieser Teilkomponenten 111 und 112 weisen diese Rippenansätzen 15 auf, die in Ort und Lage korrespondierend zu den Rippen 12 auf der Außenseite der Innenkomponente 10 angeordnet sind.

Nachfolgend soll nun auf die Herstellung des Flaschenkastens 1 näher eingegangen werden.

Beim Herstellen des erfindungsgemäßen Flaschenkastens 1 werden in einem ersten Arbeitsgang zunächst die Innenkomponente 10 und die beiden die Außenkomponente 11 bildenden Teilkomponenten 111 und 112 in einem an und für sich bekannten Spritzgießverfahren einstückig hergestellt. Die nach Erstarren der Kunststoffmaterialien formstabilen Einzelkomponenten 10, 111 und 112 werden dann in einem zweiten Arbeitsgang zu dem Flaschenkasten 1 zusammengefügt. Hierzu werden die Teilkomponenten 111 und 112 quasi von außen auf die Innenkomponente 10 aufgesetzt, wobei die Rippen 12 der Innenkomponente 10 und die Rippenansätze 15 der beiden Teilkomponenten 111 und 112 an ihren Stirnfläche miteinander verbunden werden, was hier durch Anschmelzen der Stirnflächen, also durch Verschweißen, erfolgt (auch andere Kunststoffschweißverfahren sind möglich). Aufgrund der über die gesamte Seitenwandung 3 verteilten Rippen 12 und Rippenansätze 15 erfolgt eine äußerst stabile, dauerhafte (im Sinne von unlösbar) und auch bruchsichere Verbindung der Innenkomponente 10 mit den beiden die Außenkomponente 11 bildenden Teilkomponenten 111 und 112.

Die stirnseitige Verbindung der Rippen 12 und der Rippenansätze 15 zeigt die vergrößerte Darstellung gemäß Fig. 1d, die eine solche Verbindung im Eckbereich des Flaschenkastens in einer Schnittansicht zeigt. (Es soll an dieser Stelle nochmals darauf hingewiesen werden, dass die Verbindung zwischen der Innenkomponente 10 und der Außenkomponente 11 gemäß diesem Ausführungsbeispiel nur anhand des Stirnflächenkontakts der Rippen 12 und der Rippenansätze 15 erfolgt.) Hier erkennt man, wie die Rippen 12 der Innenkomponente 10 und die Rippenansätze 15 der Stirnwand 312 und der Längswand 321 (zu den Teilkomponenten 111 und 112 gehörend) an ihren Stirnflächen miteinander verbunden sind. Fernerhin erkennt man, dass die Innenwandung 50 der Innenkomponente 10 und der Längswandabschnitt 321 bzw. der Stirnwandabschnitt 312 (der Teilkomponenten 111 und 112), welche die doppelwandige Seitenwandung 3 des Flaschenkastens 1 in diesem Eckbereich ausbilden, mehrere Hohlräume einschließen. Die Rippen 12 und die Rippenansätze 15 sind mit unterschiedlichen Höhen ausgebildet, wobei die Rippen 12 hier höher als die Rippenansätze 15 ausgebildet sind (jeweils bezogen auf die Oberfläche von der aus sie sich erstrecken). Selbstverständlich ist es auch möglich, die Rippen 12 und die Rippenansätze mit gleicher Höhe, oder die Rippenansätze 15 höher als die Rippenansätze 12 auszubilden. Auch eine nicht einheitliche Ausbildung ist möglich. Ebenso ist es möglich, die Rippen nur auf einer Seite, d.h. nur auf der Innenkomponente 10 oder nur auf der Außenkomponente 11 anzuordnen.

Darüber hinaus erkennt man in Fig. 1d, dass die Rippen 12 und die Rippenansätze 15 mit gleicher Breite ausgebildet sind. Auch dies ist aber keine zwingende Vorgabe. Gemäß dem hier beschriebenen Ausführungsbeispiel ist vorgesehen, dass sich die Rippen 12 im Wesentlichen senkrecht zum Boden 2 erstrecken, was dann selbstverständlich auch für die Rippenansätze 15 gilt. Es ist jedoch auch möglich querverlaufende Rippen und/oder schrägverlaufende Rippen vorzusehen.

Wie zuvor dargelegt dienen die Rippen 12 und die Rippenansätze 15 einerseits der Verbindung der beiden Kastenkomponenten 10 und 11. Andererseits dienen sie aber auch der Versteifung, damit sich der betreffende Flachenkasten unter Last, bspw. im Stapel, weniger verformt und/oder mehr Gewichtslast abtragen kann. In den bei Belastung des Kastens, bspw. bei Stapellast, besonders kritischen Eckbereichen ist eine Verbindung mittels zweier eng beieinander liegender Rippen 12 (und Rippenansätzen 15) vorgesehen, was für die Stabilität des Flaschenkastens 1 besonders vorteilhaft ist. Schließlich dienen die Rippen 12 und die Rippenansätze 15 auch als Abstandshalter, die definierte Hohlräume zwischen der Innenkomponente 10 und Außenkomponente 11 im Bereich der Seitenwandung 3 ausbilden. Den Rippen kommt damit zumindest eine Dreifachfunktion zu.

Gemäß dem hier beschriebenen Ausführungsbeispiel wird die Außenkomponente 11 durch zwei Teilkomponenten 111 und 112 gebildet. Es ist jedoch auch möglich vier im Wesentlichen plattenartige Teilkomponenten vorzusehen, die dann jeweils einer Längs- bzw. Stirnwand (311, 312; 321, 322) entsprechen.

Vorzugsweise ist vorgesehen, die Innenkomponente 10 und die Außenkomponente 11 aus unterschiedlichen Materialien zu fertigen, wobei mit unterschiedlichen Materialien auch gleiche Materialien mit unterschiedlichen Farben gemeint sind. Es ist jedoch ebenso möglich, die beiden Komponenten aus ein und demselben Material herzustellen. Mit Materialien sind bevorzugt spritzgießgeeignete schlagzähe und/oder bruchfeste Kunststoffmaterialien gemeint. Insbesondere die Außenkomponenten 11 kann jedoch auch durch Laminierung und/oder aus Verbundwerkstoffen gebildet sein kann.

Wie sich aus den Fig. 1b und 1c ergibt, weisen die Innenkomponente 10 und die Außenkomponente 11 über ihre gesamte Ausbildung hinweg im Wesentlichen konstante Wandstärken (Wanddicken) auf, wobei auch die Rippen 12 und die Rippenansätze 15 in diesen Wandstärken ausgebildet sind. Solch konstante Wandstärken sind beim Spritzgießen besonders vorteilhaft, weil dadurch Materialanhäufungen vermieden werden, die beim Abkühlen zu ungewollten Spannungen und Verformungen im Bauteil führen können. Fernerhin können Material und damit Gewicht und Kosten eingespart werden.

Der Boden 2, der gemäß diesem Ausführungsbeispiel einteilig mit der Innenkomponente 10 ausgebildet ist, ist in den Fig. 1a bis 1c als geschlossen und eben ausgebildet dargestellt. Ebenso ist es jedoch auch möglich den Boden 2 mit Rippen und/oder Ausnehmungen zu versehen oder in einer sonstigen der Funktion folgenden Weise zu gestalten.

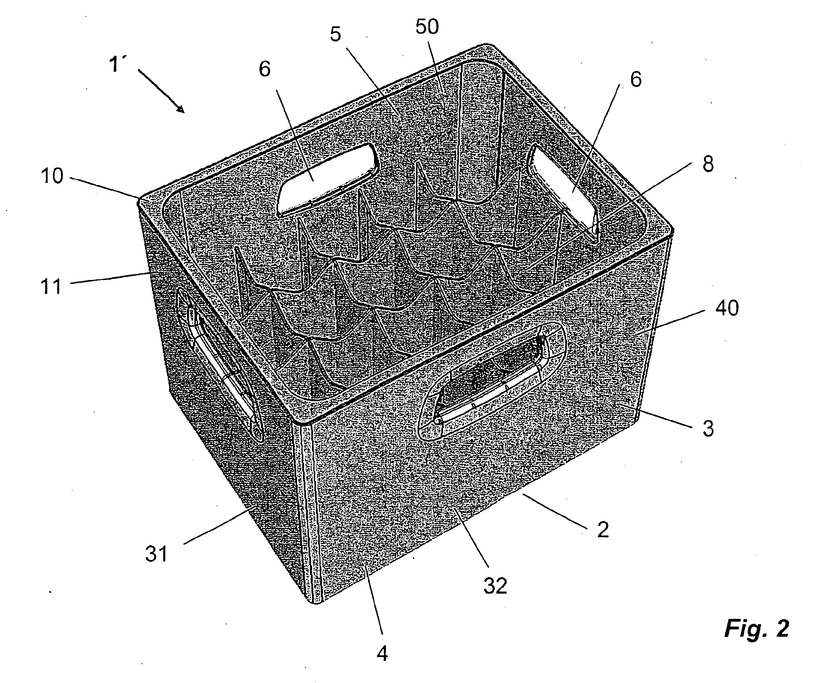

Die Fig. 2 zeigt ein zweites Ausführungsbeispiel des erfindungsgemäßen Behälters, wobei es sich auch hier um einen Flaschenkasten handelt, der insgesamt mit 1' bezeichnet ist. Dieser Flaschenkasten 1' ist im Wesentlichen gleich aufgebaut wie der Flaschenkasten 1 des ersten Ausführungsbeispiels gemäß den Fig. 1a-1c. Der Unterschied liegt darin, dass der Behälter 1' keine Pinolen 9 aufweist, sondern eine fachwerkartige Anordnung von Trennwänden 8, die insgesamt 20 Einstellplätze (Fächer) für die aufzunehmenden Flaschen schaffen, wodurch den aufgenommenen Flaschen ein bestmöglicher Halt im Flaschenkasten 1' gegeben ist und ein Kippen oder auch ein Aneinanderschlagen der Flaschen vermieden wird. Die Trennwände 8 sind hier parallel zu den Seitenwänden der Seitenwandung 3 ausgebildet, wobei auch eine diagonale Anordnung möglich ist. Auch dieser Flaschenkasten 1' ist aus einer Innenkomponente 10 und einer Außenkomponente 11 gebildet.

Die Herstellung dieses zweiten Ausführungsbeispieles betreffend soll zur Vermeidung von Wiederholungen auf die obigen Ausführungen zum ersten Ausführungsbeispiel verwiesen werden, die auch für dieses Ausführungsbeispiel explizit gelten.

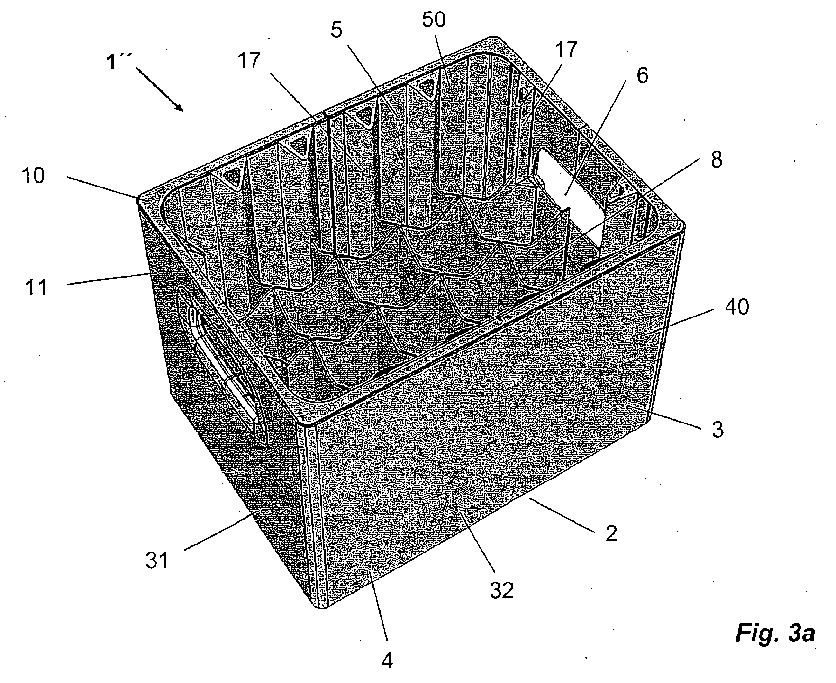

Die Fig. 3a zeigt ein drittes Ausführungsbeispiel eines erfindungsgemäßen Behälters, wobei es sich auch hier um einen Flaschenkasten handelt, der insgesamt mit 1" bezeichnet ist. Der Flaschenkasten 1 " entspricht im Wesentlichen dem zweiten Ausführungsbeispiel gemäß der Fig. 2. Der maßgebliche Unterschied liegt jedoch in den in der Seitenwandung 3 integrierten Stützen (Holmen) 17, wobei an den Längswänden 32 jeweils vier solcher Stützen und an den Stirnseiten 31 jeweils zwei solcher Stützen angeordnet sind. Die Stützten 17 sind dabei im Wesentlichen senkrecht zum Boden 2 ausgebildet, wobei dies keine zwingende Vorgabe ist. Diese Stützen 17 versteifen den Kasten 1 " insbesondere in Höhenrichtung (Richtung senkrecht zum Boden 2), was vor allem das Lastabtragevermögen bei Stapelung beladener Flaschenkästen erhöht. Die Stützen 17 dienen aber auch der Erhöhung der Torsionsfestigkeit des Flaschenkastens, was dann von Vorteil ist, wenn der Flaschenkasten herunterfällt oder beim Transport heftig anschlägt.

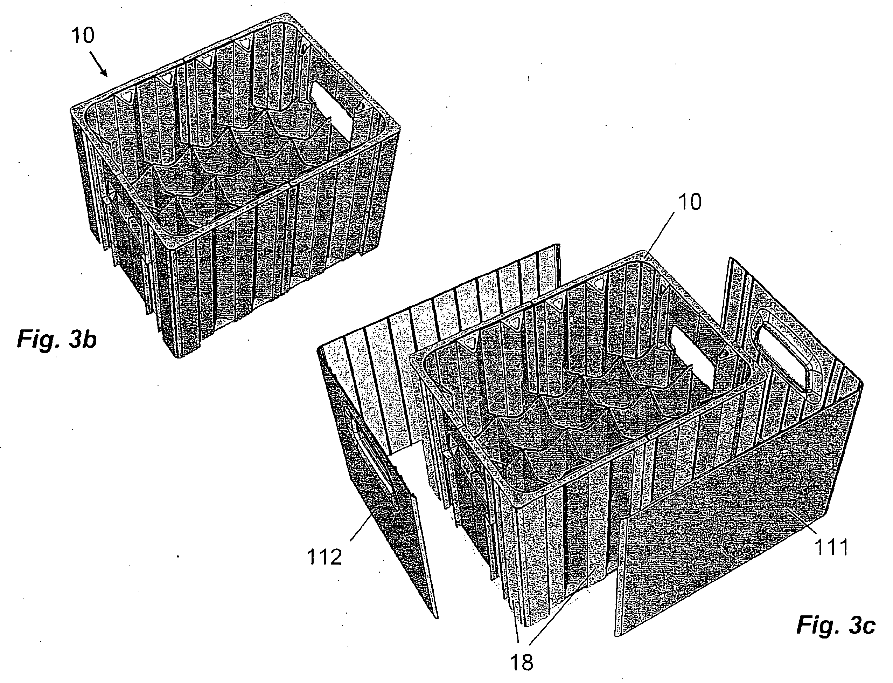

Die Fig. 3b zeigt die Innenkomponente 10 des Flaschenkastens 1". In Abwandlung zu den beiden vorausgehenden Ausführungsbeispielen ist die Innenwandung 5 nicht mehr eben ausgebildet, sondern weist ins Behälterinnere vorstehende Ausbauchungen auf, welche die Stützen bzw. Stützstege 17 ausbilden. Trotz dieser Stützen 17 ist vorgesehen, dass die Innenkomponente 10 insgesamt annähernd konstante Wandstärken aufweist. Für die Herstellung einer solchen Innenkomponente im Spritzgießverfahren sind bei geschicktem Werkzeugaufbau keine Kerne erforderlich. So lassen sich die Ausbauchungen der Stützstege 17 bspw. durch verfahrbare Werkzeugwände ausbilden.

Die Fig. 3c zeigt in einer perspektivischen Ansicht die Anordnung der Innenkomponente 10 und der beiden die Außenkomponente bildenden Teilkomponenten 111 und 112. Im Unterschied zu den vorausgehenden Ausführungsbeispielen weist die Innenkomponente 10 an ihrer Außenseite keine Rippen auf. Die Teilkomponenten 111 und 112 weisen auf ihren der Innenkomponente 10 zugewandten Oberfläche zwar Rippenansätze 15 auf, diese dienen jedoch nur zur Versteifung dieser Teilkomponenten, nicht jedoch zur Verbindung mit der Innenkomponente 10. Die Verbindung zwischen Innenkomponente 10 und den Teilkomponenten 111 und 112 erfolgt durch einen Klebstoff, der auf die Flächenabschnitte, die auf der Außenseite der Innenkomponente 10 zwischen den Stützen 17 ausgebildet sind, aufgebracht wird, was in Fig. 3c mit dem Bezugszeichen 18 hervorgehoben ist. Beim Zusammenfügen der Innenkomponente 10 mit den Teilkomponenten 111 und 112 korrespondieren diese Klebeflächen an der Außenseite der Innenkomponente 10 mit Flächenabschnitten auf den Innenseiten der Teilkomponenten 111 und 112, woraus eine feste und stabile Verbindung der Komponenten hervorgeht.

Anders als bei den zuvor beschriebenen beiden Ausführungsbeispielen werden hier die Innenkomponente und die die Außenkomponente bildenden Teilkomponenten 111 und 112 nicht an den Stirnflächen ihrer Rippen bzw. Rippenansätze miteinander verschweißt, sondern entlang mehrerer um den Umfang der Innenkomponente 10 verteilter Flächenabschnitte miteinander verklebt, wobei eine mindestens gleichwertige Verbindungskraft erzeugt wird. Selbstverständlich ist es auch möglich an Stelle der Klebeverbindung lösbar und/oder unlösbare Rast- oder Clipverbindungen o. dgl. vorzusehen, wobei eine Verbindung mittels einer Schweißverbindung und/oder Klebeverbindung jedoch zu bevorzugen ist, da somit optimale Synergieeffekte bezüglich Steifigkeit und Festigkeit erreicht werden. Selbstverständlich ist es auch möglich, die Komponenten entlang von Rippen bzw. Rippenansätzen miteinander zu verkleben. Im Falle einer Verklebung sollten die Verbindungsflächen jedoch vorteilhafterweise breiter ausgebildet sein.

An diesem Ausführungsbeispiel treten wesentliche Vorteile des erfindungsgemäßen Behälters bzw. dessen erfindungsgemäßen Herstellungsverfahrens deutlich hervor. Während bei den aus dem Stand der Technik bekannten Herstellungsverfahren einer Doppelwand, insbesondere einer Doppelwand mit integrierten Stützen, Werkzeugkerne verwendet werden, die geregelt in die Form ein- und ausfahren, sind diese hier nicht mehr erforderlich. Die Innenkomponente 10 kann (wie oben beschrieben) gänzlich ohne Verwendung von Kernen hergestellt werden, ebenso die Teilkomponenten 111 und 112 die die Außenkomponente 11 bilden.

Es sei an dieser Stelle darauf hingewiesen, dass die zuvor beschriebenen Ausbauchungen der Innenwandung 50 optional (d.h. alternativ oder ergänzend) auch an der Außenwandung 40 vorgesehen sein können. Auch eine gänzlich andere Ausgestaltung solcher Stützen ist möglich.

Ein weiterer wesentlicher Vorteil ist die Funktionsteilung zwischen Innenkomponente 10 und Außenkomponente 11, sodass für die Innenkomponente 10 ein für die Funktion des Lastabtrags geeigneter Werkstoff ausgewählt werden kann, während für die Außenkomponente 11 ein Werkstoff bspw. nach ästhetischen Gesichtspunkten ausgewählt werden kann.

Im Zusammenhang mit dem zuvor beschriebenen dritten Ausführungsbeispiel soll auch ein weiteres nicht in den Figuren dargestelltes Ausführungsbeispiel erläutert werden. Wie oben beschrieben, ist es vorteilhaft in der Seitenwandung des Kastens Stützen bzw. Stützstege zu integrieren, um die Gesamtsteifigkeit und das Lastabtragevermögen zu erhöhen. Im zuvor beschriebenen Ausführungsbeispiel wird dies durch Ausbauchungen der Innenwandung 50 der Innenkomponente 10 in Richtung des Kasteninneren erreicht. Dies führt jedoch dazu, dass die Innenfläche 5 des Flaschenkastens nicht mehr eben ausgebildet ist, was, wie oben beschrieben, zumindest einen ästhetischen Nachteil darstellt. In einer optionalen Ausführungsform ist daher vorgesehen, in die Seitenwandung 3 wenigstens eine fertig ausgebildete Versteifungsstütze einzusetzen, der dann quasi zwischen der Außenwandung 40 und der Innenwandung 50 eingeschweißt oder eingeklebt ist. Bevorzugt ist vorgesehen, mehrere solcher Versteifungsstützen über die Seitenwandung 3 verteilt anzuordnen. Diese Versteifungsstützen sind bevorzugt, wie die üblichen Behälterkomponenten auch, aus Kunststoff gefertigt, können jedoch auch aus anderen Materialien, wie Aluminium, Faserwerkstoffen, Verbundmaterialien und dgl. gebildet sein. Diese Versteifungsstützen sind bevorzugt stabartig oder als Hohlprofile (auch Mehrkammerprofile) ausgebildet. Die Versteifungsstützen werden beim Zusammenfügen der Innen- und Außenkomponenten quasi zwischen diesen Komponenten angeordnet oder unmittelbar oder kurz nach dem Zusammenfügen dieser Komponenten bspw. von unten in die Seitenwandung eingefügt. Selbstverständlich lassen sich solche Versteifungsstützen mit jedem oben beschriebenen Seitenwandungsaufbau kombinieren.

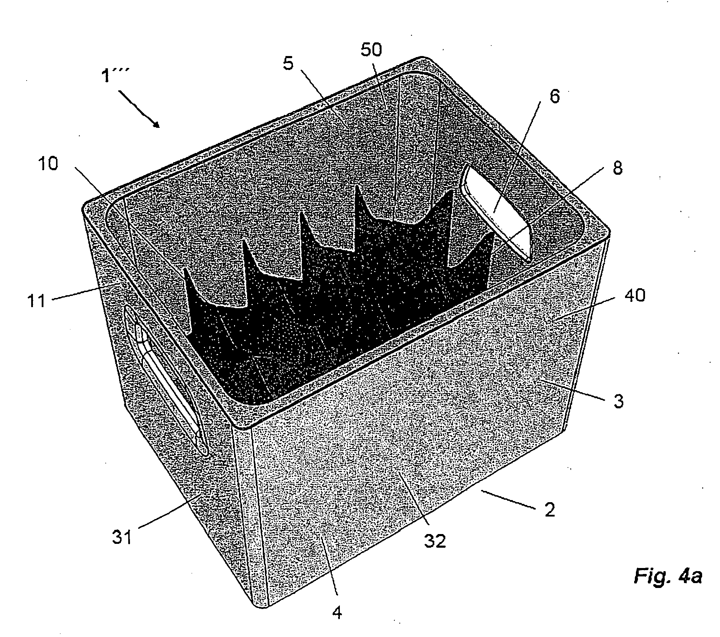

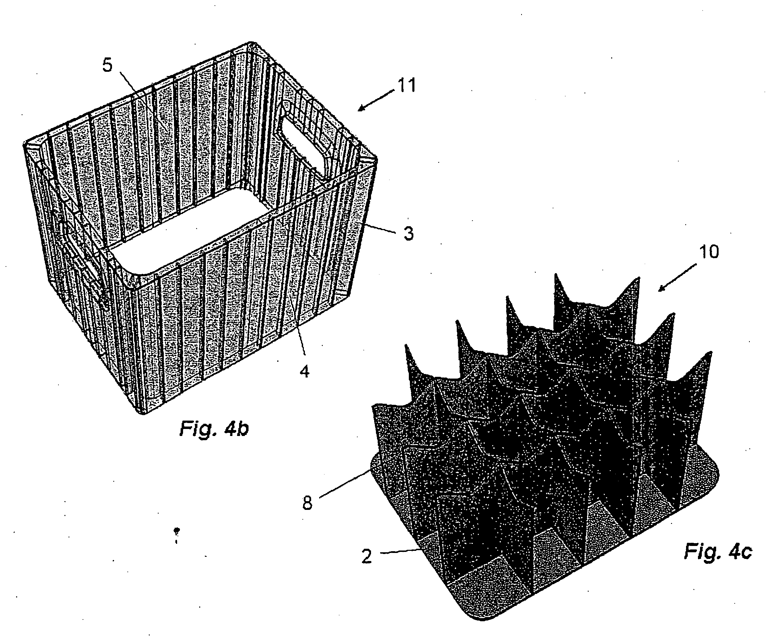

In Fig. 4a ist ein weiteres Ausführungsbeispiel gezeigt, das im Wesentlichen dem zweiten Ausführungsbeispiel gemäß der Fig. 2 entspricht. Der Flaschenkasten 1"' weist jedoch nur zwei Durchgriffsöffnungen 6 auf, die jeweils an den Stirnwänden 31 der Seitenwandung 3 angeordnet sind. Wie auch die vorausgehenden Ausführungsbeispiele, so ist auch der Flaschenkasten 1"' aus einer Innenkomponente 10 und aus einer Außenkomponente 11 gebildet. Die Fig. 4b zeigt die Außenkomponente 11, die die gesamte und bevorzugt doppelwandig ausgebildete Seitenwandung 3 umfasst und die in diesem Fall einteilig ausgebildet ist. Die Außenflächen 4 und die Innenflächen 5 sind hier eben gestaltet. Die Fig. 4c zeigt die Innenkomponente 10, wobei diese hier nur den Boden 2 und die daran angeordneten Trennwände 8 umfasst, welche die einzelnen Fächer zum Einstellen der Flaschen ausbilden. Die Innenkomponente 10 umfasst demnach also nicht einen Innenwandungsabschnitt 50, wie bei den vorausgehenden Ausführungsbeispielen. Auch bei diesem Ausführungsbeispiel ist vorgesehen, dass die Innenkomponente 10 und die Außenkomponente 11 in einem ersten Fertigungsschritt als separate Teile bspw. in einem Spritzgießprozess hergestellt werden. In einem zweiten Fertigungsschritt werden die Innenkomponente 10 und die Außenkomponente 11 zusammengeführt und mittels Verschweißung und/oder Verklebung dauerhaft und fest miteinander verbunden.

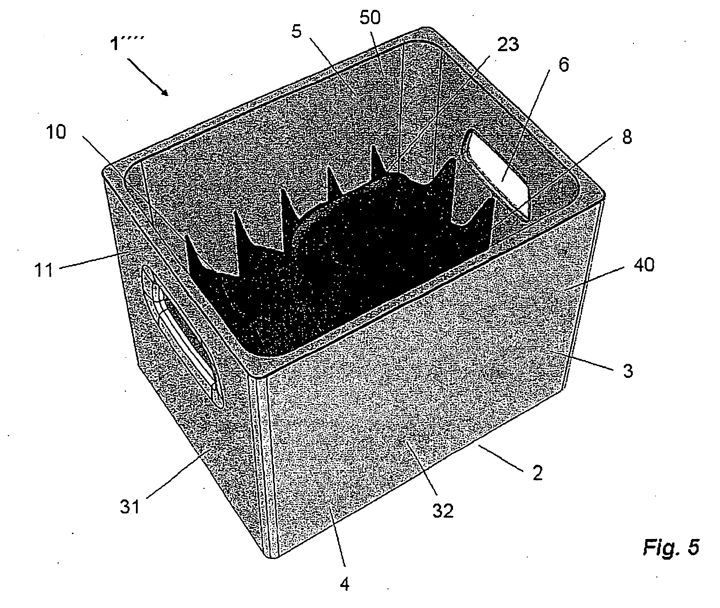

Die Fig. 5 zeigt ein weiteres Ausführungsbeispiel, das im Wesentlichen dem Ausführungsbeispiel der Fig. 4a entspricht. Optional weist der Flaschenkasten 1"" jedoch zusätzlich einen als Mittelhandgriff ausgebildeten Tragegriff 23 auf, der in diesem Fall eintstückig mit der Innenkomponente 10 ausgebildet ist.

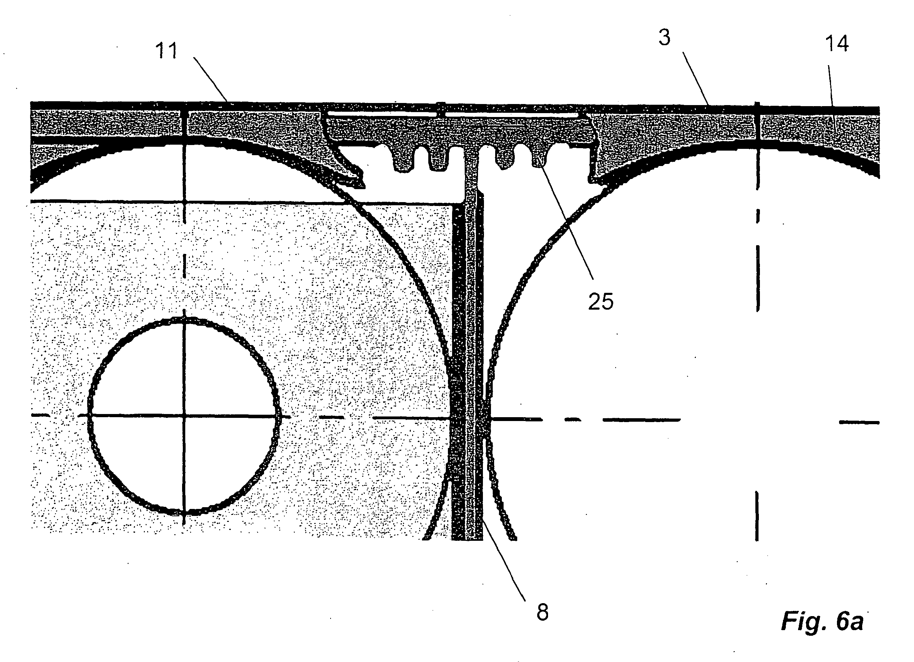

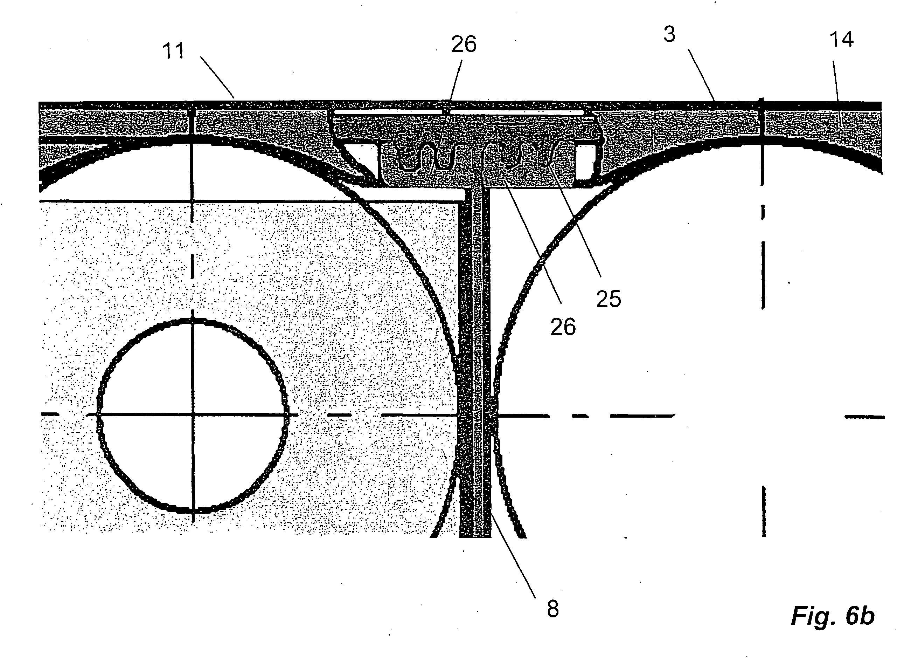

In den Figuren 6a und 6b ist ein weiteres Ausführungsbeispiel gezeigt, für das möglicherweise auch gesondert Schutz beantragt wird. Wie bereits oben im Zusammenhang mit den andern Ausführungsbeispielen mehrfach beschrieben, ist es vorteilhaft, in die Seitenwandung des Kastens Stützen bzw. Stützstege zu integrieren. Die Fig. 6a zeigt einen Ausschnitt aus einem Flaschenkasten in einer Draufsicht. Im Bereich in dem die Trennwand 8 hier an die Innenseite der Außenkomponente 11 der Seitenwandung 3 anstößt ist zur Sichtbarmachung der (in diesem Beispiel an der Außenkomponente angeordnete) Kragen 14 aufgeschnitten dargestellt. Die gezeigte Trennwand 8 erstreckt sich in einem im Wesentlichen rechten Winkel von der Innenseite der Außenkomponente 11 ins Kasteninnere hinein. Rechts und links des Anordnungspunktes der Trennwand 8 an der Innenseite der Außenkomponente 11 ist letztere mit nach innen (d. h. zum Kasteninneren hin) im Wesentlichen rechtwinkelig vorstehenden Rippen 25 ausgebildet. In diesem Fall befinden sich rechts und links der Trennwand 8 jeweils zwei solcher Rippen 25, was jedoch nur eine beispielhafte Anzahl darstellt. Die Rippen 25 sind, wie man unschwer erkennen kann, mit gleicher Wandstärke wie die Außenkomponente 11 selbst ausgebildet, um Materialanhäufungen zu vermeiden. Die Rippen 25 können sich über die gesamte Behälterhöhe hin erstrecken oder jedoch nur abschnittsweise ausgebildet sein. Selbstverständlich ist es auch möglich, dass sich die Rippen quer zur Behälterhöhenrichtung oder auch schräg dazu erstrecken.

Die Rippen 25 dienen einerseits zur Versteifung der Außenkomponente 11 des Flaschenkastens, andererseits jedoch auch als Ansatz für Versteifungselemente 26. Dies zeigt Fig. 6b. Die Versteifungselemente 26 sind auf der zum Kasteninneren hin gewandten Seite eben und flach ausgebildet und weisen auf ihrer gegenüberliegenden Seite ein zu den Rippen 25 der Außenkomponente 11 korrespondierendes Rippenprofil auf, das in dem dargestellten Ausführungsbeispiel die Rippen 25 der Außenkomponente 11 in sich aufnimmt und quasi komplett umschließt. Wie Fig. 6b zeigt ist in diesem Ausführungsbeispiel rechts und links der Trennwand 8 jeweils ein Versteifungselement 26 vorgesehen. Das Versteifungselement umgreift, wie bereits zuvor beschrieben, die nach innen vorstehenden Rippen 25 der Außenkomponente 11 formschlüssig. Die Verbindung erfolgt also nicht an den Stirnflächen, sondern entlang der sich verzahnenden Seitenflächen und der sich gegenüberstehenden Rippenkuppen und Rippentäler. Um eine feste Verbindung zu gewährleisten, werden vorzugsweise die Versteifungselemente 26 zusätzlich aufgeklebt oder aufgeschweißt. Alternativ ist auch vorgesehen, die Versteifungselemente 26 direkt auf die Rippen 25 der Außenkomponente 11 aufzuspritzen, wobei die Haltewirkung dann durch Vernetzung der Kunststofffasern und/oder durch Mikroformschluss im Grenzbereich erreicht wird. Bei dem aufgespritzten Kunststoffmaterial handelt es sich vorzugsweise um einen harten, die Steifigkeit der Seitenwandung 3 erhöhenden Kunststoff.

Die Kombination der auf der Innenseite der Außenkomponente 11 nach innen vorstehenden Rippen 25 und der darauf aufgesetzten Versteifungselemente 26 führt zu einem äußerst stabilen, steifen und verwindungsarmen Seitenwandungsaufbau. In Übereinstimmung mit den vorausgehenden Ausführungsbeispielen ist vorgesehen, dass diese Rippen 25 und Versteifungselemente 26 im Bereich zwischen der Außenkomponente 11 und der in den Figuren 6a und 6b nicht dargestellten Innenkomponente 10 angeordnet sind, also im Hohlraum der Seitenwandung 3.

Es ist jedoch auch möglich auf die Innenkomponente 10 zu verzichten, so dass der Behälter bzw. Flaschenkasten im Wesentlichen aus einer Außenkomponente 11, mit einem daran angeformten Boden und daran angeformten Trennwänden 8 ausgebildet ist, und auf der Innenseite der Seitenwandung 3 nach Innen vorstehende Rippen 25 vorgesehen sind, auf welche die Versteifungselemente 26 aufgesetzt werden. Es kann dabei auch vorgesehen sein, dass auf der gesamten Innenseite der Seitenwandung 3 mehr oder weniger gleichmäßig verteilte Rippen 25 angeordnet sind, auf die dann die Versteifungselemente 26 aufgeklebt, aufgeschweißt oder aufgespritzt werden. Dabei kann auch vorgesehen sein, dass die gesamte Innenseite der Seitenwandung 3 überspritzt wird. Der Vorteil eines solchen Behälters ist neben der extrem stabilen Seitenwandung eine nach Innen hin, d.h. zum Kasteninneren hinweisende ebene, flache und geschlossene Oberfläche, die einen hochwertigen optischen und haptischen Gesamteindruck vermittelt und sich sehr gut zu Werbezwecken bedrucken und/oder auch sehr gut reinigen lässt.

Es soll hier noch darauf hingewiesen werden, dass der Boden 2, obwohl in den obigen Ausführungsbeispielen als geschlossene Fläche ausgebildet, auch Ausnehmungen, Vertiefungen, Löcher u. dgl. aufweisen kann ohne vom Erfindungsgedanken abzuweichen. Auch die Seitenwände der Seitenwandung 3, die in den Ausführungsbeispielen bezogen auf den Behälterboden 2 gleichhoch ausgebildet sind, können unterschiedlich hoch ausgebildet sein, oder Unterbrechungen, Ausnehmungen, Absätze und dgl. aufweisen ohne dass dadurch vom Erfindungsgedanken abgewichen wird. Die Innenkomponente 10 kann, obwohl oben als einteilig und einstückig beschrieben, auch mehrteilig und/oder mehrstückig ausgebildet sein.

## Patentansprüche

1. Behälter aus Kunststoff (1), insbesondere Flaschenkasten, zur Lagerung und zum Transport von Gegenständen, insbesondere Flaschen, umfassend einen Boden (2) und eine im Wesentlichen senkrecht um diesen herum ausgebildete Seitenwandung (3), wobei der Behälter aus wenigstens einer inneren spritzgegossenen Komponente (10) und aus wenigstens einer äußeren spritzgegossenen Komponente (11) gebildet ist, die mittels Verschweißung und/oder Verklebung fest zusammengefügt sind, wobei die wenigstens eine innere Komponente (10) und die wenigstens eine äußere Komponente (11) unter Ausbildung einer wenigstens einen Hohlraum aufweisenden doppelwandigen Seitenwandung (3) zusammengefügt sind,
**dadurch gekennzeichnet, dass**
der Behälter (1) eine einstückig ausgebildete Innenkomponente (10) und eine zweiteilig ausgebildete Außenkomponente (11) umfasst, wobei jede Teilkomponente (111, 112) der Außenkomponente (11) jeweils eine Stirnseite (31) und eine Längsseite (32) umfasst, oder der Behälter (1) eine einstückig ausgebildete Innenkomponente (10) und eine mit vier im Wesentlichen plattenartigen Teilkomponenten ausgebildete Außenkomponente umfasst, wobei jede Teilkomponente der Außenkomponente einer Stirnseite oder einer Längsseite (32) entspricht.

2. Behälter nach Anspruch 1,
**dadurch gekennzeichnet, dass**
eine Innenwandung (50) der doppelwandigen Seitenwandung (3) durch die wenigstens eine innere Komponente (10) gebildet ist und eine Außenwandung (40) dieser doppelwandigen Seitenwandung (3) durch die wenigstens eine äußere Komponente (11).

3. Behälter nach Anspruch 1 oder 2,
**dadurch gekennzeichnet, dass**
die wenigstens eine innere Komponente (10) und die wenigstens eine äußere Komponente (11) jeweils für sich betrachtet formstabil ausgebildet sind.

4. Behälter nach einem der vorherigen Ansprüche,
**dadurch gekennzeichnet, dass**
die wenigstens eine innere Komponente (10) und die wenigstens eine äußere Komponente (11) mittels mehrerer Rippen (12, 15) miteinander verschweißt sind, wobei die Stirnflächen dieser Rippen die Verbindungsflächen sind, und/oder mittels mehrerer Klebeflächen (18).

5. Behälter nach Anspruch 4,
**dadurch gekennzeichnet, dass**
die Rippen (12) und/oder Klebeflächen (18) in Bezug auf den Boden (2) im Wesentlichen senkrecht verlaufend angeordnet sind, und diese Rippen (12) und/oder Klebeflächen (18) über die gesamte Behälterwandung (3) verteilt angeordnet sind, bevorzugt im Wesentlichen gleichmäßig verteilt angeordnet sind.

6. Behälter nach Anspruch 4 oder 5,
**dadurch gekennzeichnet, dass**
die Rippen (12) nach außen vorstehend an dem die Innenwandung (50) ausbildenden Teilbereich der wenigstens einen inneren Komponente (10) angeordnet sind, und wobei in den Eckbereichen bevorzugt wenigstens zwei Rippen (12) angeordnet sind.

7. Behälter nach Anspruch 4, 5 oder 6,
**dadurch gekennzeichnet, dass**
auf der Innenseite des die Außenwandung (40) ausbildenden Teilbereichs der wenigstens einen äußeren Komponente (11) zu den Rippen (12) der wenigstens einen inneren Komponente (10) korrespondierende Rippen oder Rippenansätze (15) angeordnet sind.

8. Behälter nach Anspruch 7,
**dadurch gekennzeichnet, dass**
die wenigstens eine innere Komponente (11) und die wenigstens eine äußere Komponente (10) an den Stirnflächen dieser Rippen oder Rippenansätze (12, 15) miteinander verschweißt sind.

9. Behälter nach einem der vorherigen Ansprüche,
**dadurch gekennzeichnet, dass**
die wenigstens eine innere Komponente (10) und die wenigstens eine äußere Komponente (11) aus unterschiedlichen, bevorzugt schlagzähen und/oder bruchsicheren Kunststoffmaterialen gefertigt sind.

10. Verfahren zum Herstellen eines Behälters aus Kunststoff gemäß einem der vorausgehenden Ansprüche, umfassend einen Boden (2) und eine im Wesentlichen senkrecht dazu ausgebildete um diesen herum ausgebildete Seitenwandung (3) umfassend die Schritte:
- Urformen mittels Spritzgießen wenigstens einer inneren Komponente (10) aus einem ersten Material, vorzugsweise einem Kunststoffmaterial,
- Urformenmittels Spritzgießen wenigstens einer äußeren Komponente (11) aus einem zweiten Material, vorzugsweise einem Kunststoffmaterial, und
- Verschweißen und/oder Verkleben der wenigstens einen inneren Komponente (10) und der wenigstens einen äußeren Komponente (11), wobei die wenigstens eine innere Komponente (10) und die wenigstens eine äußere Komponente (11) unter Ausbildung einer wenigstens einen Hohlraum aufweisenden doppelwandigen Seitenwandung (3) zusammengefügt werden.

11. Verfahren nach Anspruch 10,
**dadurch gekennzeichnet, dass**
das Verschweißen entlang von Rippen oder Rippenansätzen (12, 15) erfolgt, die an der wenigstens einen Innenkomponente (10) und bevorzugt an der wenigstens einen Außenkomponente (11) angeformt sind, wobei die Stirnflächen dieser Rippen als Verbindungsflächen dienen.

12. Verfahren nach Anspruch 10,
**dadurch gekennzeichnet, dass**
die Verklebung entlang von Klebeflächen (18) erfolgt, wobei die Klebeflächen (18) bevorzugt an wenigstens einer Außenseite der wenigstens einen inneren Komponente (10) angeordnet sind und wenigstens eine Innenseite der wenigstens einen äußeren Komponente (11) entsprechende korrespondierende Flächenabschnitte aufweist.

13. Verfahren nach einem der Ansprüche 10 bis 12,
**dadurch gekennzeichnet, dass**
zwischen dem Urformen und dem Fügen der Komponenten (10, 11) die Oberflächen behandelnde oder die Oberflächen verändernde Fertigungsschritte umfasst sind.

14. Verfahren nach einem der Ansprüche 10 bis 13,
**dadurch gekennzeichnet, dass**
das erste Material und das zweite Material identisch sind.

## Claims

1. A container (1) made from plastic material, in particular a bottle case for storing and transporting objects, in particular bottles, comprising a base (2) and a lateral wall (3) essentially configured in a perpendicular manner about the base, wherein the container is formed from at least one inner injection molded component (10) and at least one outer injected molded component (11) which are permanently joined through welding and/or gluing, wherein the at least one inner component (10) and the at least one outer component (11) are joined forming a double shell lateral wall (3) including at least one cavity, wherein the container (1) includes an inner component (10) that is integrally configured in one piece and an outer component (11) that is configured in two pieces, wherein each partial component (111, 112) of the outer component (11) respectively includes a face side (31) and a longitudinal side (32), or the container (1) includes an integrally configured inner component (10) and an outer component that is configured from four essentially plate shaped partial components, wherein each partial component of the outer component corresponds to a face side or a longitudinal side (32).

2. The container according to claim 1, wherein an inner wall (50) of the double walled lateral wall (3) is formed by the at least one inner component (10) and an outer wall (40) of the double walled lateral wall (3) is formed by the at least one outer component (11).

3. The container according to claim 1 or 2, wherein the at least one inner component (10) and the at least one outer component (11) are respectively configured form stable by themselves.

4. The container according to one of the preceding claims, wherein the at least one inner component (10) and the at least one outer component (11) are welded to one another through plural ribs (12, 15), wherein the face surfaces of the ribs are joining surfaces and/or through plural gluing surfaces (18).

5. The container according to claim 4, wherein the ribs (12) and/or the gluing surfaces (18) are arranged substantially perpendicular with respect to the base (2) and the ribs (12) and/or the gluing surfaces (18) are arranged distributed over the entire container wall (3), preferably distributed in a substantially even manner.

6. The container according to claim 4 or 5, wherein the ribs (12) are arranged outward protruding at the partial portion of the at least one inner component (10) forming the inner wall (50) and wherein preferably at least two ribs (12) are arranged in corner portions.

7. The container according to claim 4, 5 or 6, wherein ribs or rib onsets (15) are arranged on the inside of the partial portion of the at least one outer component (11) forming the outer wall (40), wherein the ribs or the rib onsets (15) correspond to the ribs (12) of the at least one inner component (10).

8. The container according to claim 7, wherein the at least one inner component (11) and the at least one outer component (10) are welded together at the face surfaces of the ribs or rib onsets (12, 15).

9. The container according to one of the preceding claims, wherein the at least one inner component (10) and at least one outer component (11) are made from different preferably impact resistant and/or break resistant plastic materials.

10. The method for forming a container made from plastic according to one of the preceding claims, including a base (2) and a lateral wall (3) configured essentially perpendicular to the base and around the base, comprising the following steps:
• forming at least one inner component (10) from a first material, preferably a plastic material through injection molding;
• forming at least on outer component (11) from a second material, preferably a plastic material through injection molding; and
• welding and/or gluing the at least one inner component (10) and the at least one outer component (11) together, wherein the at least one inner component (10) and the at least one outer component (11) are joined forming a double walled lateral wall (3) including at least one cavity.

11. The method according to claim 10, wherein the welding is performed along ribs or rib onsets (12, 15) which are formed at the at least one inner component (10) and preferably at the at least outer component (11), wherein the face surfaces of the ribs are being used as joining surfaces.

12. The method according to claim 10, wherein the gluing is performed along gluing surfaces (1), wherein the gluing surfaces (18) are preferably arranged at least at one outside of the at least one inner component (10) and at least at one inside of the at least one outer component (11) includes respective corresponding surface sections.

13. The method according to one of the claims 10 - 12, wherein production steps treating the surfaces or modifying the surfaces are included between forming and joining the components (10, 11).

14. The method according to one of the claims 10 - 13, wherein the first material and the second material are identical.

## Revendications

1. Conteneur en matière plastique (1), en particulier caisse à bouteilles, pour l'entreposage et le transport d'objets, en particulier de bouteilles, comprenant un fond (2) et une paroi latérale (3) constituée essentiellement de façon perpendiculaire tout autour de ce fond, le conteneur étant formé d'au moins un composant (10) intérieur moulé par injection et d'au moins un composant (11) extérieur moulé par injection qui sont assemblés solidement par soudage et/ou collage, le composant (10) intérieur au moins au nombre de un et le composant (11) extérieur au moins au nombre de un étant réunis en formant une paroi latérale (3) à double paroi présentant une cavité,
**caractérisé en ce que**
le conteneur (1) comprend un composant (10) interne constitué d'une seule pièce et un composant (11) externe constitué en deux pièces, chaque composant partiel (111, 112) du composant (11) externe comprenant respectivement un côté frontal (31) et un côté longitudinal (32), ou **en ce que** le conteneur (1) comprend un composant (10) interne constitué d'une seule pièce et un composant externe constitué de quatre composants partiels essentiellement de type panneau, chaque composant partiel du composant externe correspondant à un côté frontal ou à un côté longitudinal (32).

2. Conteneur selon la revendication 1,
**caractérisé en ce**
**qu'**une paroi interne (50) de la paroi latérale (3) à double paroi est formée par le composant (10) intérieur au moins au nombre de un, et une paroi externe (40) de cette paroi latérale (3) à double paroi est formée par le composant (11) extérieur au moins au nombre de un.

3. Conteneur selon la revendication 1 ou la revendication 2,
**caractérisé en ce que**
le composant (10) intérieur au moins au nombre de un et le composant (11) extérieur au moins au nombre de un sont constitués de façon stable pour chacun d'entre eux.

4. Conteneur selon l'une des revendications précédentes,
**caractérisé en ce que**
le composant (10) intérieur au moins au nombre de un et le composant (11) extérieur au moins au nombre de un sont assemblés par soudage au moyen de plusieurs nervures (12, 15), les faces frontales de ces nervures étant les faces de raccordement, et/ou au moyen de plusieurs surfaces de collage (18).

5. Conteneur selon la revendication 4,
**caractérisé en ce que**
les nervures (12) et/ou les surfaces de collage (18) sont, par rapport au fond (2), disposées de façon essentiellement perpendiculaire, et **en ce que** ces nervures (12) et/ou surfaces de collage (18) sont disposées de façon répartie sur toute la paroi de conteneur (3), de préférence disposées de façon répartie essentiellement régulièrement.

6. Conteneur selon la revendication 4 ou la revendication 5,
**caractérisé en ce que**
les nervures sont disposés en saillie vers l'extérieur sur la zone partielle, constituant la paroi interne (50), du composant (10) intérieur au moins au nombre de un, et de préférence au moins deux nervures (12) étant disposées dans les zones de coin.

7. Conteneur selon les revendications 4, 5 ou 6,
**caractérisé en ce que,**
sur le côté interne de la zone partielle, constituant la paroi externe (40), du composant (11) extérieur au moins au nombre de un, il est disposé des nervures ou des amorces de nervures (15) correspondant aux nervures (12) du composant (10) intérieur au moins au nombre de un.

8. Conteneur selon la revendication 7,
**caractérisé en ce que**
le composant (10) intérieur au moins au nombre de un et le composant (11) extérieur au moins au nombre de un sont assemblés par soudage sur les faces frontales de ces nervures ou amorces de nervures (12, 15).

9. Conteneur selon l'une des revendications précédentes,
**caractérisé en ce que**
le composant (10) intérieur au moins au nombre de un et le composant (11) extérieur au moins au nombre de un sont réalisés en matériaux plastiques différents, de préférence résilients et/ou résistants à la rupture.

10. Procédé de fabrication d'un conteneur en matière plastique selon l'une des revendications précédentes, comprenant un fond (2) et une paroi latérale (3) constituée tout autour de ce fond et essentiellement de façon perpendiculaire à ce fond, comprenant les opérations suivantes :
- façonnage par moulage par injection d'au moins un composant (10) intérieur à partir d'un premier matériau, de préférence un matériau plastique,
- façonnage par moulage par injection d'au moins un composant (11) extérieur à partir d'un deuxième matériau, de préférence un matériau plastique, et
- assemblage par soudage et/ou par collage du composant (10) intérieur au moins au nombre de un et du composant (11) extérieur au moins au nombre de un, le composant (10) intérieur au moins au nombre de un et le composant (11) extérieur au moins au nombre de un étant réunis en formant une paroi latérale (3) à double paroi présentant au moins une cavité.

11. Procédé selon la revendication 10,
**caractérisé en ce que**
le soudage est effectué le long de nervures ou amorces de nervures (12, 15) qui sont formées sur le composant (10) interne au moins au nombre de un et de préférence sur le composant (11) externe au moins au nombre de un, les faces frontales de ces nervures servant de faces de raccordement.

12. Procédé selon la revendication 10,
**caractérisé en ce que**
le collage est effectué le long de surfaces de collage (18), les surfaces de collage (18) étant disposées de préférence sur au moins un côté extérieur du composant (10) intérieur au moins au nombre de un, et au moins un côté interne du composant (11) extérieur au moins au nombre de un présentant des tronçons de surface correspondants en correspondance.

13. Procédé selon l'une des revendications 10 à 12,
**caractérisé en ce que,**
les étapes de fabrication traitant les surfaces ou modifiant les surfaces sont comprises entre le façonnage et l'assemblage des composants (10, 11).

14. Procédé selon l'une des revendications 10 à 13,
**caractérisé en ce que**
le premier matériau et le deuxième matériau sont identiques.
